# EUROPÄISCHE PATENTSCHRIFT

(11) **EP 1 018 532 B1**
(45) Veröffentlichungstag und Bekanntmachung des Hinweises auf die Patenterteilung: **16.01.2008**
(21) Anmeldenummer: 98122375.3
(22) Anmeldetag: 26.11.1998
(51) Int. Cl.: C08J 7/12, B05D 7/24, B05D 7/22

(54) **Verfahren zur Herstellung multifunktionaler plasmapolymerisierter Schichten auf Kunststoffteilen, insbesondere auf der Innenoberfläche von Kunststoffkraftstoffbehältern (KKB) aus Polyethylen**
Process for making multifunctional plasma polymerized layers on plastic parts
Procédé de fabrication de couches multifonctionelles polymerisées par plasma sur des parties plastiques

(43) Veröffentlichungstag der Anmeldung: 12.07.2000
(73) Patentinhaber: INPRO Innovationsgesellschaft für fortgeschrittene Produktionssysteme in der Fahrzeugindustrie mbH, 10587 Berlin (DE)
(72) Erfinder: Gleich, Henning, 47259 Duisburg (DE); Hoyer, Olaf, 16727 Schwante (DE); Kempen, Thomas, 12043 Berlin (DE); Klare, Jürgen, 38436 Vechelde (DE); Steinhardt, Ingolf, 10585 Berlin (DE)
(74) Vertreter: Hoffmann, Klaus-Dieter

(56) Entgegenhaltungen:
- EP-A- 0 739 655
- DE-A- 3 908 418

## Beschreibung

Die Erfindung betrifft ein Verfahren zur plasmagestützten Herstellung multifunktionaler plasmapolymerisierter Schichten auf definiert veredelten Innenoberflächen von Kunststoffteilen wie Kunststoffkraftstoffbehältern (KKB) aus Polyethylen.

Es ist bekannt, daß die Morphologie der Innenoberfläche von blasgeformten und rußgefüllten Monolayer-Hohlkörpern aus Polyethylen hoher Dichte (PE-HD), insbesondere von Kunststoffkraftstoffbehältern (KKB), für Beschichtungen mittels Dünnschichttechnik keine optimale Substratoberfläche bilden. Hier wirkt sich vor allem die teilweise Entmischung der Rußpartikel zur Oberfläche hin sehr negativ aus, da damit verbunden unerwünschte Agglomerierungseffekte auftreten können, die zu einer sehr inhomogenen Oberfläche führen.

Weiterhin ist bekannt (DE 3632748 C2, DE 3908418 A1, EP 0 739 655 A1), daß die Plasmapolymerisation ein wirkungsvolles Barriereverfahren darstellt, Hohlkörper aus PE-HD derartig innen zu beschichten, daß die Permeation von Kohlenwasserstoffen durch die Hohlkörper stark reduziert wird.

Alternativ zur Plasmapolymerisation ist die Herstellung von KKB im Sechsschicht-Coextrusionsverfahren bekannt. Die unterschiedlichen thermischen Ausdehnungskoeffizienten der bei der Sechsschicht-Coextrusion eingesetzten Werkstoffe führen jedoch zu sehr komplizierten Abkühlungsverhältnissen, die wiederum zu einer weiteren Anhäufung von Fehlstellen an der KKB-Innenwand führen können. Deshalb hat sich bereits beim coextrudierten KKB die Einbringung einer zusätzlichen Feinschicht aus PE-HD natur als innerste Schicht bewährt. Da diese Glättung der Innenoberfläche auch bei chemisch fluorierten KKB eine höhere Sperrwirkung ermöglicht, gibt es eine Tendenz zur Substitution der Einschichtextrusion (Monolayer) durch eine Zweischicht-Coextrusion mit einer Außenschicht aus rußversetztem PE-HD und einer inneren Schicht aus HD-PE natur, die als glatter, möglichst Fehlstellen freier Untergrund beste Voraussetzungen für die anschließend aufzubringende Barriereschicht liefert, ohne daß hierbei zwei unterschiedliche Werkstoffe verwendet werden. Die Zweischicht-Coextrusion wird bei der Herstellung unterschiedlichster Hohlkörper als Verpackungs- bzw. Vorratsbehälter in ökonomischer Weise eingesetzt.

Die Plasmapolymerisation besteht bekanntermaßen aus verschiedenen teilweise konkurrierenden bzw. in einem statischen Gleichgewicht stehenden Reaktionen. In einer groben Einteilung lassen sich diese in schichtaufbauende und schichtabbauende Reaktionen unterteilen. Werden die Modellvorstellungen für die interessierenden schichtaufbauenden Reaktionen betrachtet, so ist ein Weg vom Monomer zur Schicht über Zwischenstationen wie Fragment, Oligomer und Cluster beschrieben (Grünwald, Heinrich: Grundlagen und Prozeßtechnik der Plasmapolymerisation; Vortrag auf der Plasmatec (1994)). Ein weiterer beschriebener Weg verläuft über die sofortige Adsorption des Monomers an der Oberfläche des Ausgangsmaterials (zu beschichtendes Substrat) mit einer anschließenden Vernetzung durch die - beim Plasmaprozeß immer vorhandene - harte UV-Strahlung und Elektronenbeschuß.

Der Erfindung liegt die Aufgabe zugrunde, ein Verfahren der eingangs erwähnten Art zur Verfügung zu stellen, mit dem die Plasmapolymerisation auf definiert veredelten Innenoberflächen der Kunststoffteile wie Kunststoffkraftstoffbehälter (KKB) zu erzielen ist, die prozeßoptimiert permeationsmindernd eingestellt werden sollen. Insbesondere soll für eine Optimierung des Plasmapolymerisation durch definierte Vorbehandlung der zu beschichtenden Innenoberflächen gesorgt werden.

Diese Aufgabe wird erfindungsgemäß gelöst durch ein Verfahren zur plasmagestützten Herstellung multifunktionaler plasmapolymerisierter Schichten auf definiert veredelten Innenoberflächen von Kunststoffteilen wie Kunststoffkraftstoffbehältern (KKB) aus Polyethylen, bei dem
- eine das Plasma bildende Prozeßgasatmosphäre erzeugt wird,
- die Innenoberfläche des Kunststoffteils unter Beaufschlagung mit dem Plasma beschichtet und parallel mit Nanoteilchen/Precusoren unter Nutzung der statischen Aufladung adsorptionsmäßig belegt wird,
- eine Barriereschicht in Form einer Nanoverbundschicht während einer Wasserstoff-, Sauerstoff-, Stickstoff- und/oder Inertgas-Plasmabehandlung anteilig aus einer Kombination der noch im Kunststoffteil vorhandenen Oligomere, gleichzeitig in die Innenoberfläche des Kunststoffteils zusätzlich eingeführter Additive sowie zeitgleich zugeführter Nanoteilchen und Monomeren/ Monomergasen gebildet wird, und
- gezielt Gase, Oligomere und/oder Monomere in die Outersurface (bis 5 nm Tiefe) und/oder Subsurface (bis 50 µm Tiefe) der Innenschicht des polymeren Kunststoffteils (KKB) temporär bis zum Einsetzen der Plasmabehandlung und der damit verbundenen Migration dieser Substanzen eingebunden werden.

Vorteilhafte Weiterbildungen des erfindungsgemäßen Verfahrens sind in den Patentansprüchen 2 bis 5 beschrieben.

Vorzugsweise wird die Innenoberflächen des Kunststoffteils vor der Barriereschichtbildung durch Kontamination mit flüssigen Medien wie z.B. Kohlenwasserstoffeb (Benzinen) vorbehandelt.

Zur Optimierung des Verfahrens kann weiterhin die Oligomerkonzentration im Kunststoffteil erhöht und/oder die Nachvernetzungsfähigkeit des PE-HD des Kunsststoffteils durch Zumischung reaktiver Additive oder durch Erhöhung der reaktiven Anteile des Polymers gesteigert werden.

Von Vorteil ist es auch, ein Kunststoffteil zu verwenden, dessen Innenoberfläche durch geeignete Wahl der Verfahrensparameter beim Blasformen, der Schmelzrotation oder der Zweischicht-Bulk-Herstellung gezielt geglättet wird.

Die Zumischung barrierereduzierender Additive in die Innenschicht des Kunststoffkraftstoffbehälters (KKB) bei dessen Herstellung ermöglicht während der anschließenden Plasmapolymerisation des KKB eine verbesserte Barrierewirkung, ohne jedoch die mechanischen und thermischen Eigenschaften des KKB aus PE-HD in irgendeiner Weise zu verschlechtern. Auch die Hinzufügung von höherwertigen Stoffkomponenten pro Kohlenstoffatom im Molekül erweist sich als günstig.

Es ist bekannt (Dr. Andres Holländer, Dr. Jörg Behnisch, Vortrag "Zur Rolle der UV-Strahlung bei der Plasmabehandlung von Polymeren" auf der Frühjahrssitzung des Arbeitskreises Plasmaoberflächentechnologie am 12. Mai 1998), daß für Plasmaprozesse zwischen Outer Surface (bis 5 nm Tiefe) und Subsurface (bis 50 µm Tiefe) an der Oberfläche des polymeren Substrats unterschieden werden muß. Gemäß dem erfindungsgemäßen Verfahren werden daher Gase, Oligomere und/oder Monomere in die Outersurface (bis 5 nm Tiefe) und/oder Subsurface (bis 50 µm Tiefe) der Innenschicht des polymeren Kunststoffteils (KKB) temporär bis zum Einsetzen der Plasmabehandlung und der damit verbundenen Migration dieser Substanzen eingebunden. Von Wichtigkeit ist, daß diese Substanzen während des Evakuierens nicht aus dem Material der Innenschicht des KKB herausgesaugt werden. Dies kann durch geeignete Bindungskräfte oder genügende Eindringtiefe erreicht werden und ist auch über die vakuumtechnischen Parameter beeinflußbar und beherrschbar.

Das erfindungsgemäße Verfahren sorgt für eine optimierende Vorbehandlung des zu beschichtenden Ausgangsmaterials (Substrats), indem dieses vor der Plasmabehandlung mit speziellen Chemikalien in Berührung gebracht wird. Diese Chemikalien ad- und/oder absorbieren an bzw. in dem Substrat, so daß letzteres ein neues Eigenschaftsprofil während der Plasmabehandlung/Plasmapolymerisation zeigt. Adsorbierte Moleküle beschleunigen den Polymerisationsprozeß, da sie sofort auf dem Substrat für eine Reaktion zur Verfügung stehen und nicht erst durch den Monomergasstrom an das Substrat herangeführt werden müssen. Absorbierte Moleküle werden durch die relativ weitreichende Eindringtiefe der Vernetzungsstrahlung auch innerhalb des Substrats zur Vernetzung angeregt. Sie bilden somit ideale Anknüpfungspunkte für die weiter aufwachsende Schicht. Diese optimierende Vorbehandlung ermöglicht zwei Arbeitsweisen für eine Polymerisation. Einserseits wird das Substrat vorbehandelt und anschließend wird mit einem Plasma ohne organisches Monomer eine Reaktion hervorgerufen. Als verwendete Gase kommen Inertgase wie Argon in Betracht oder auch Gase, die spezifische Radikale erzeugen können wie z.B. Sauerstoff, Wasserstoff oder Stickstoff. Anderseits wird das vorbehandelte Substrat wie bisher mit einem beschichteten Plasma (mit organischem Monomer) veredelt. Mit beiden Methoden kann die Plasmapolymerisation in Bezug auf Behandlungszeit und bezüglich der Eigenschaftsprofile optimiert werden.

Das erfindungsgemäße Verfahren wird nun anhand der Zeichnungen erläutert. In diesen sind:
- Fig. 1: eine schematische Darstellung einer stark vergrößerten KKB-Oberfläche im Vakuum, wobei das Verhalten von Gasteilchen, Partikeln und Additiven im Substrat bzw. an der Substrat-Oberfläche verdeutlicht ist,
- Fig. 2: eine schematische Darstellung einer Barriereschichtbildung während der Plasmabehandlung der Substrat-Oberfläche,
- Fig. 3: ein Diagramm, das die Monomer/Additiv - Konzentration in Abhängigkeit von der Eindringtiefe bzw. Schichtdicke in bzw. auf der Substrat-Oberfläche zeigt,
- Fig. 4: ein Diagramm, aus dem die prozentuale Gewichtszunahme des Bulk über die Sorptionszeit hervorgeht,
- Fig. 5: ein Diagramm, das die prozentuale Abgabekonzentration sorbierter Kohlenwasserstoffe über die Prozeßzeit zeigt,
- Fig. 6: ein Diagramm, das den Schichtaufbau über die Prozeßzeit verdeutlicht, und
- Fig. 7: ein Diagramm, das die Teilchen- und die Monomerkonzentration über die Prozeßzeit verdeutlicht.

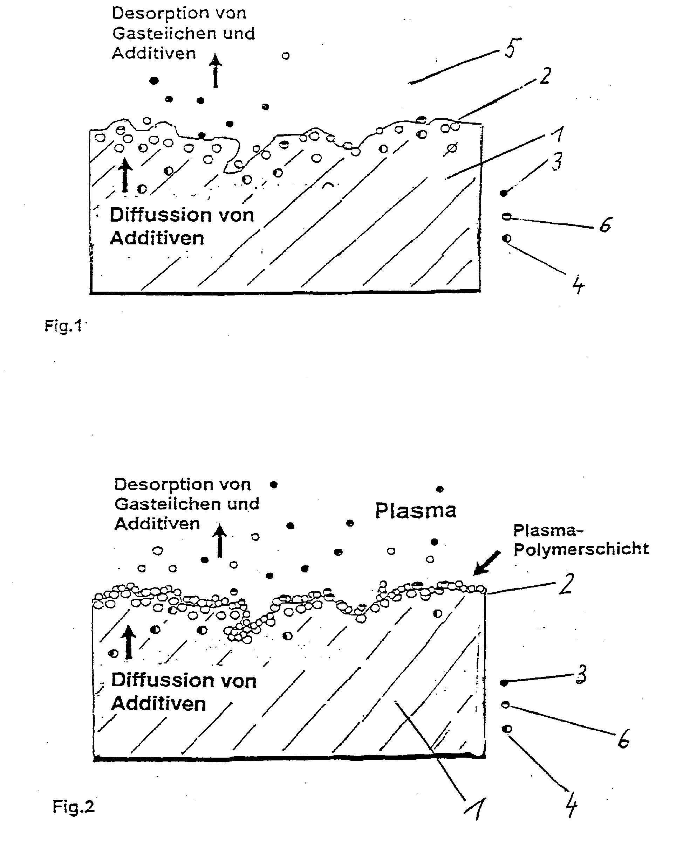

Im Hochvakuumbereich spielt die Freisetzung von Gasteilchen von einer Oberfläche in den Vakuumraum - die sogenannte Desorption - bekannterweise eine zu beachtende Funktion. Fig. 1, die eine schematische Darstellung einer stark vergrößerten Oberfläche 2 eines KKB (Substrat PE-HD) 1 darstellt, verdeutlicht, daß z.B. durch thermische Energie die Desorption von Gasteilchen 3 und Additiven 4 in den Vakuumraum 5 aus der Substrat-Oberfläche 2 induziert wird. Im Material des Substrats gespeicherte bzw. gelöste Teilchen 6 bzw. Gasteilchen 3 können durch thermische Wanderbewegung, d.h. durch Diffusion an die Substrat-Oberfläche 2 gelangen. Die Teilschritte Diffusion und Desorption bilden zusammen die Gasabgabe des Substrats 1. Fig. 2 verdeutlicht die schematische Barriereschichtbildung auf dem Substrat PE-HD 1 gemäß einer bevorzugten Ausführungsform des Verfahrens während der Plasmabehandlung, wobei die Schichtbildung anteilig aus einer Kombination von noch im Substrat vorhandener Oligomere, der KKB-Innenschicht zusätzlich zugeführter Additive und dem Plasmapolymerisationsprozeß zusätzlich zugeführter Monomer/Monomergasgemische erfolgt.

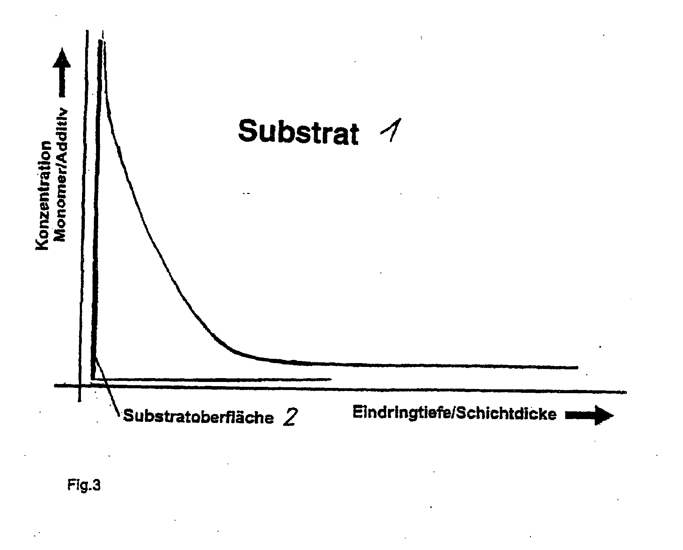

Fig. 3, aus der die Monomer/Additiv-Konzentration in Abhängigkeitvon der Schichtdicke des Substrats hervorgeht, verdeutlicht, daß die Monomer/Additiv - Konzentration, ausgehend vom Höchstwert auf und unmittelbar unterhalb der Substrat-Oberfläche 2, nach hyperbelartig verlaufender Abnahme bei einer bestimmten Schichtdicke des Substrats 1 konstant bleibt.

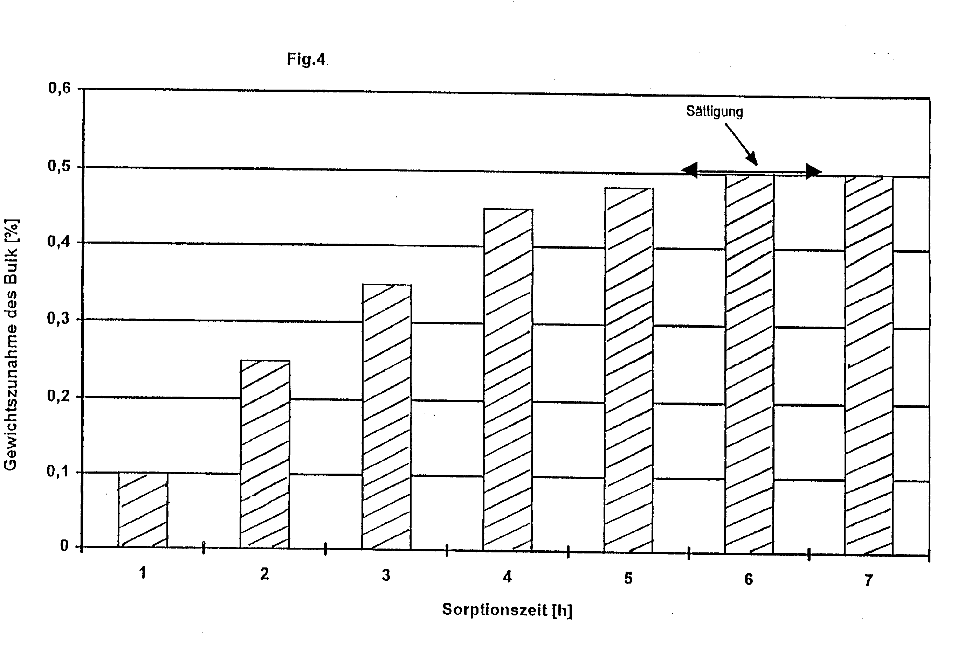

Aus dem Diagramm gemäß Fig.4 geht - säulenartig dargestellt - die prozentuale Gewichtszunahme des Bulk über die Sorptionszeit, gemessen in Stunden, hervor,wobei zu sehen ist, daß nach 6 Stunden der Sättigungszustand bei 0,5 % der Gewichtszunahme des Bulk erreicht ist.

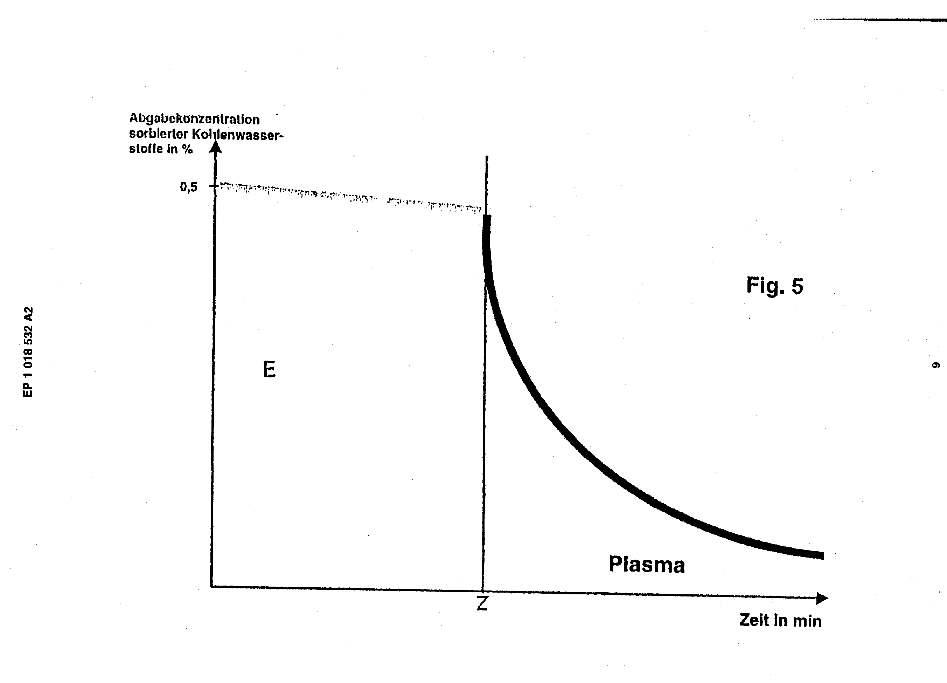

Im Diagramm nach Fig. 5 ist die Abgabekonzentration sorbierter Kohlenwasserstoffe in Prozent über die Prozeßzeit in Minuten aufgetragen. Während der Evakuierungsphase E verringert sich die Abgabekonzentration des Kohlenwasserstoffs ausgehend von 0,5 % geringfügig, um dann im Zündzeitpunkt Z zunächst schlagartig und darauf hyperbelartig verlaufend abzunehmen.

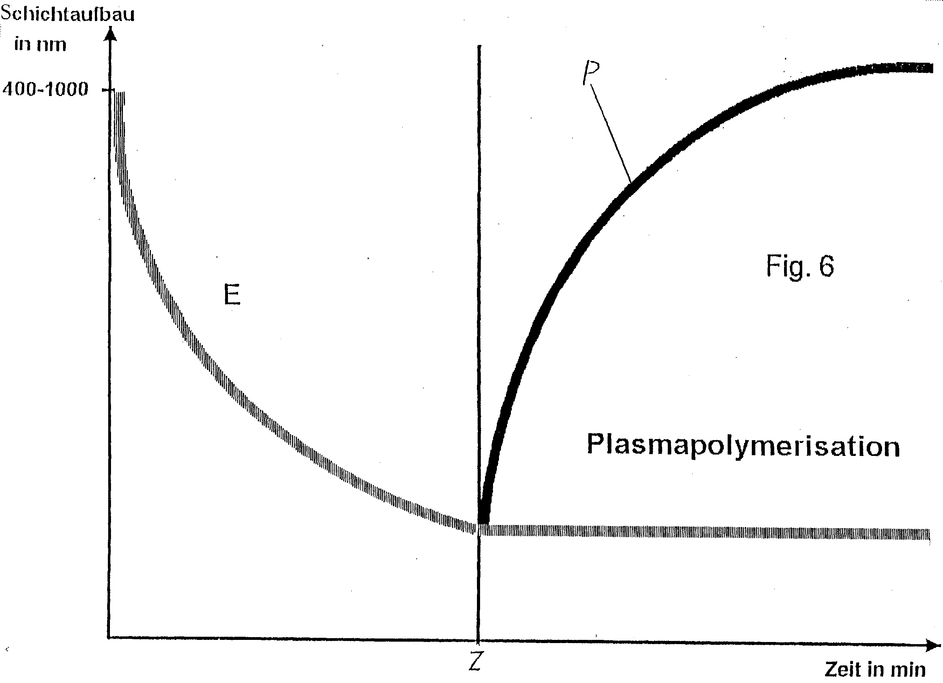

Aus Fig. 6 geht diagrammmäßig der Schichtaufbau in Nanometer über die Prozeßzeit in Minuten hervor. Ausgehend von einem Schichtaufbau von 400 bis 1000 nm zu Beginn der Evakuierungsphase E verringert sich die Schichtstärke in einem hyperbelartig abnehmenden Verlauf während der Evakuierung, um ab Zündzeitpunkt Z im Prinzip konstant zu bleiben, wobei dann eine durch statische Aufladung begünstigte Teilchenbelegung und eine nachfolgende Überdeckung der Schicht mittels Plasmapolymerisation gemäß der Kurve P erfolgen.

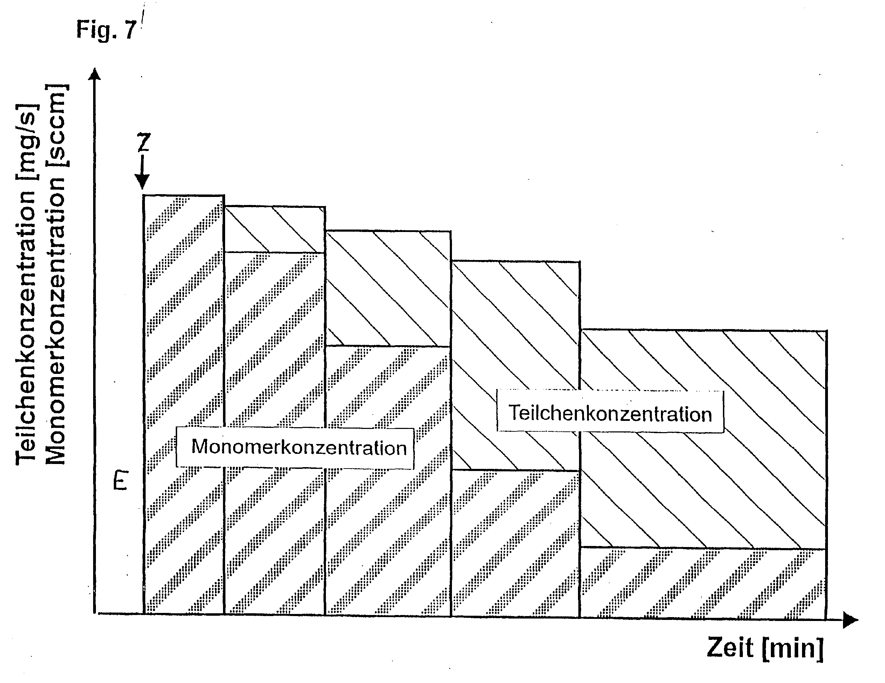

Das Diagramm nach Fig. 7, in dem die Teilchenkonzentration in mg/s" und die "Monomerkonzentration in sccm" jeweils aktuelle Strömungsmenge der entsprechenden Materialien darstellend über die "Prozeßzeit in min" aufgetragen sind, verdeutlicht den Verfahrensschritt, bei dem Nanoteilchen und Monomere zur Bildung des Nanoverbundes während der Plasmapolymerisation eingebracht werden. Es ist zu sehen, daß nach erfolgter Plasmazündung (Zündzeitpunkt Z) die Monomerkonzentration über die Zeit stufenförmig abnimmt (punktschraffierte Säulen) und kombiniert die Teilchenkonzentration zugleich kompensationsmäßig stufenförmig zunimmt (strichschraffierte Säulen), wobei die Gesamtkonzentration über die Zeit abnimmt.

## Patentansprüche

1. Verfahren zur plasmagestützten Herstellung multifunktionaler plasmapolymerisierter Schichten auf definiert veredelten Innenoberflächen von Kunststoffteilen wie Kunststoffkraftstoffbehältern (KKB) aus Polyethylen, bei dem
- eine das Plasma bildende Prozeßgasatmosphäre erzeugt wird,
- die Oberfläche des Kunststoffteils unter Beaufschlagung mit dem Plasma beschichtet und parallel mit Nanoteilchen/Precusoren unter Nutzung der statischen Aufladung adsorptionsmäßig belegt wird,
- eine Barriereschicht in Form einer Nanoverbundschicht während einer Wasserstoff-, Sauerstoff-, Stickstoff- und/oder Inertgas-Plasmabehandlung anteilig aus einer Kombination der noch im Kunststoffteil vorhandenen Oligomere, gleichzeitig in die Innenoberfläche des Kunststoffteils zusätzlich eingeführter Additive sowie zeitgleich zugeführter Nanoteilchen und Monomeren/Monomergasen gebildet wird, und
- gezielt Gase, Oligomere und Monomere in die Outersurface bis 5 nm Tiefe und/oder Subsurface bis 50 µm Tiefe der Innenschicht des polymeren Kunststoffteils (KKB) temporär bis zum Einsetzen der Plasmabehandlung und der damit verbundenen Migration diese Substanzen eingebunden werden.

2. Verfahren nach Anspruch 1, **dadurch gekennzeichnet, daß** die Innenoberfläche des Kunststoffteils vor der Barriereschichtbildung durch Kontamination mit flüssigen Medien vorbehandelt wird.

3. Verfahren nach Anspruch 2, **dadurch gekennzeichnet, daß** als flüssige Medien Kohlenwasserstoffe (Benzine) verwendet werden.

4. Verfahren nach Anspruch 1 bis 3, **dadurch gekennzeichnet, daß** die Nachvernetzungsfähigkeit des PE-HD des Kunststoffteils durch Zumischung reaktiver Additive oder durch Erhöhung der reaktiven Anteile des Polymers gesteigert wird.

5. Verfahren nach einem der vorhergehenden Ansprüche, **dadurch gekennzeichnet, daß** der Innenschicht des Kunststoffkraftstoffbehälters (KKB) höherwertige Stoffkomponenten pro Kohlenstoffatom im Molekül oder Kraftstoffkomponenten zugefügt werden.

## Claims

1. Process for the plasma-supported production of multifunctional plasma polymerised layers on defined surface-finished inside surfaces of plastic parts such as plastic fuel tanks (PFT) of polyethylene, in which process
- a process gas atmosphere forming the plasma is produced,
- the surface of the plastic part is coated by being charged with the plasma and, in parallel, covered with nanoparticles/precursors by adsorption while utilising the static charge,
- a barrier layer is formed in the form of a nanocomposite layer of oligomers still present in the plastic part during a hydrogen, oxygen, nitrogen and/or inert gas plasma treatment proportionally, of additives additionally introduced simultaneously into the inside surface of the plastic part and nanoparticles and monomers/monomer gases simultaneously supplied and
- gases, oligomers and monomers are bonded into the outer surface up to a depth of 5 nm and/or the subsurface up to a depth of 50 µm of the inside layer of the polymeric plastic part (PFT) temporarily up to the onset of plasma treatment and the associated migration of these substances.

2. Process according to claim 1 **characterised in that** the inside surface of the plastic part is pretreated before the formation of the barrier layer by contamination with liquid media.

3. Process according to claim 2 **characterised in that** hydrocarbons (benzenes) are used as liquid media.

4. Process according to claim 1 to 3 **characterised in that** the post-crosslinkability of the PE-HD of the plastic part is increased by admixing reactive additives or by increasing the reactive portions of the polymer.

5. Process according to one of the preceding claims **characterised in that** higher valent substance components per carbon atom in the molecule or the fuel component are added to the inside layer of the plastic fuel tank (PFT).

## Revendications

1. Procédé destiné à la fabrication de couches multifonctionnelles polymérisée par plasma, lesdites couches étant réalisées sur les surfaces intérieures de pièces en matière plastique telles que les réservoirs de carburant en matière plastique (RCP), lesdites surfaces ayant préalablement subi un traitement défini de conditionnement,
- le plasma étant formé en générant une atmosphère de gaz de procédé,
- la surface de la pièce en matière plastique étant revêtue en introduisant le plasma et, parallèlement, recouverte de nanoparticules/précurseurs par adsorption, ladite adsorption étant réalisée en profitant de la charge électrostatique,
- une couche barrière étant réalisée, sous forme d'une couche composite à l'échelle nano, au cours d'un traitement avec un plasma à base d'hydrogène, d'oxygène, d'azote et/ou de gaz inerte, ladite couche étant constituée en partie d'oligomères résiduels issus de la matière plastique, en partie d'additifs supplémentaires introduits simultanément dans la surface de la pièce en matière plastique et, en partie, de nanoparticules et de monomères/monomères gazeux introduits en même temps, et
- des gaz, des oligomères et des monomères étant intégrés, d'une manière ciblée, dans la partie superficielle de la surface, c'est-à-dire jusqu'à 5 nm de profondeur, et dans la partie sous-jacente de la surface, c'est-à-dire jusqu'à 50 nm de profondeur, la surface constituant la couche intérieure de la pièce en matière plastique (RCP), ladite intégration étant réalisée temporairement jusqu'à démarrage du traitement au plasma et de la migration qui est associée à ce dernier.

2. Procédé selon la revendication 1, **caractérisé ce que** la surface intérieure est prétraitée, avant la formation de la couche barrière, par contamination avec des milieux liquides.

3. Procédé selon la revendication 2, **caractérisé en ce que** des hydrocarbures (essences) sont utilisés en tant que milieux liquides.

4. Procédé selon les revendications 1 à 3, **caractérisé en ce que** l'aptitude à la réticulation du PE-HD de la pièce en matière plastique est accrue en y mélangeant des additifs réactifs ou augmentant la proportion réactive du polymère.

5. Procédé selon l'une quelconque des revendications précédentes, **caractérisé en ce que** des composants constitués de produits à valence plus élevée par rapport à l'atome de carbone dans la molécule ou bien des composants constitués de carburants sont ajoutés à la couche intérieure du réservoir de carburant en matière plastique (RCP).
